# EUROPÄISCHE PATENTANMELDUNG

(11) **EP 3 653 587 A1**
(43) Veröffentlichungstag der Anmeldung: **20.05.2020**
(21) Anmeldenummer: 18000895.5
(22) Anmeldetag: 13.11.2018
(51) Int. Cl.: C02F 1/68, C02F 1/76

(54) **DOSIERVORRICHTUNG ZUR CHLORUNG VON WASSER**

(71) Anmelder: KLARO GmbH, 95447 Bayreuth (DE)
(72) Erfinder: GRAF, Otto P., 79331 Teningen (DE)
(74) Vertreter: Kuhnen & Wacker Patent- und Rechtsanwaltsbüro PartG mbB

(57) **Zusammenfassung**

Die Erfindung betrifft eine Dosiervorrichtung zur Zugabe von Chlor zu Wasser, insbesondere bevorzugt zu gereinigtem Wasser aus einem Reinigungsbecken, wobei ein Rohrstück (3), in welchem das Wasser zumindest zeitweise strömt, zumindest eine Sensorsonde (4) im Rohrinneren aufweist, welche erfasst, wenn sich dort Wasser befindet und dies an eine Steuerungsvorrichtung (5) meldet, so dass die Steuerungsvorrichtung (5) ein Signal an eine Dosiereinrichtung (6) für Chlor sendet, so dass die Dosiereinrichtung (6) Chlor in das Wasser abgibt.

## Beschreibung

Die Erfindung betrifft eine Dosiervorrichtung für Chlor in Form einer flüssigen Chlorlösung zu Wasser, bevorzugt gereinigtem Wasser bzw. gereinigtem Abwasser aus einem Reinigungsbecken, gemäß dem Oberbegriff des Anspruchs 1.

Derartige Dosiervorrichtungen können z.B. im Zusammenhang mit Reinigungsbecken von Kläranlagen eingesetzt werden, wie sie aus der Druckschrift DE 20 2012 004 597 als Belebungsanlagen im Aufstaubetrieb, die auch als SBR (Sequency Batch Reactor) bezeichnet werden und mindestens ein Reaktorbecken und optional ein Vorklärbecken als getrennte Reinigungsbecken aufweisen, bekannt sind. Diese Anlagen können unterschiedlich betrieben werden. So kann ein stetiger Zulauf von Abwasser in das Reaktorbecken stattfinden, wobei ein Wasserabzug von gereinigtem Wasser mit Hilfe der Wasserhebevorrichtung zunächst geschlossen ist. Mit einem Zulauf von Abwasser steigt der Wasserspiegel in dem Reaktorbecken an. Während der Abwasserzuführung laufen im Reaktorbecken nacheinander eine Belüftungsphase, eine Absetzphase und schließlich eine Wasserabzugsphase mittels der nun aktivierten Wasserhebevorrichtungen ab, wobei weiter Abwasser in das Reaktorbecken zuläuft. Anstelle eines stetigen Zulaufs von Abwasser kann die Abwasserzuführung auch schubweise erfolgen. Dabei wird das Abwasser in bestimmten Zeitabständen aus dem Vorklärbecken dem Reaktorbecken zugeführt. Das so gereinigte Wasser kann allerdings für bestimmte Anwendungen noch weiteren Behandlungsschritten unterzogen werden, beispielsweise desinfiziert werden, beispielsweise durch Membranfiltration, Ozonierung, UV-Bestrahlung oder durch Chlorung.

Dazu sind allerdings üblicher Weise relativ komplexe Vorrichtungen von Nöten, welche einer Intensiven Überwachung bedürfen. Die Wasserdesinfektion mit Chlor hat viele Vorteile: Sie ist vergleichsweise einfach, zuverlässig und bietet einen Depoteffekt. Das Problem bei der Chlorung ist allerdings die Regulierung der korrekten Dosierung. Starke Über- und Unterdosierung sind zu vermeiden. Bei starker Überdosierung wird zu viel Chlor verbraucht und es können unerwünschte Nebenprodukte entstehen. Bei Unterdosierung wird ggf. das Reinigungsziel nicht erreicht. Herkömmliche Apparaturen zur Wasser- bzw. Abwasserdesinfektion mit Chlor arbeiten beispielsweise mit Chlortabletten, welche in einem wasserführenden Rohr platziert werden, dabei in Kontakt kommen und Chlor herausgelöst wird. Die Dosierung ist jedoch bei diesem Verfahren äußerst ungenau. Bei anderen Apparaturen wird eine bestimmte Menge an zu reinigendem Wasser in einem Speicher gesammelt und durch Aktivierung eines Schwimmers die Chlorzugabe reguliert. Dies ist aufwändig, fehleranfällig und wenig flexibel.

Es ist daher die Aufgabe der vorliegenden Erfindung, eine Dosiervorrichtung für Chlor bereit zu stellen, welche die oben genannten Nachteile überwindet und mittels konstruktiv einfacher Maßnahmen eine automatisierte und dennoch zuverlässige Desinfektion von gereinigtem Wasser einer Kläranlage ermöglicht.

Diese und andere Aufgaben der vorliegenden Erfindung werden mit einer Dosiervorrichtung mit den Merkmalen des Anspruchs 1 bzw. einer entsprechenden Kläranlage mit einer solchen Dosiervorrichtung gemäß Anspruch 6 gelöst.

Bevorzugte Ausgestaltungen und Weiterbildungen sind in den abhängigen Ansprüchen dargelegt.

Gemäß der vorliegenden Erfindung weist eine Dosiervorrichtung für Chlor in Form einer flüssigen Chlorlösung zu Wasser, insbesondere bevorzugt gereinigtem Wasser, nämlich bevorzugt gereinigtem Abwasser, aus einem Reinigungsbecken eines Klärbereichs einer Kläranlage, auf:
Ein Rohrstück, in welchem Wasser zumindest zeitweise, bevorzugt in bestimmten Zeitabständen, d.h. batchweise, strömt,
zumindest eine Sensorsonde im Rohrinneren aufweist, welche erfasst, wenn sich dort das Wasser befindet und dies an eine Steuerungsvorrichtung meldet,
so dass die Steuerungsvorrichtung ein Signal an eine Dosiereinrichtung für Chlor sendet, so dass die Dosiereinrichtung Chlor in das Wasser abgibt.

Mit der erfindungsgemäßen Dosiervorrichtung kann eine automatisierte und dennoch zuverlässige Desinfektion von Wasser bzw. gereinigtem Abwasser einer Kläranlage erfolgen, ohne dass zusätzliche Schwimmer oder ähnlich fehleranfällige mechanische Bauteile dazu benötigt werden.

Zur besseren Durchmischung von Wasser und beigefügtem Chlor kann erfindungsgemäß bevorzugt die Dosiereinrichtung einem Chlor-Kontaktbecken zugeordnet sein, in welches das Chlor in das Wasser abgegeben wird.

Zur besonders zuverlässigen und zumindest weitestgehend automatischen Chlorzugabe kann die erfindungsgemäße Steuerungsvorrichtung bevorzugt so vorgesehen sein, dass die Menge des abzugebenden Chlors (der abzugebenden Chlorlösung) in Abhängigkeit der Menge des strömenden Wassers steuerbar ist, wobei eine größere Menge strömendes Wasser eine größere Menge abzugebenden Chlors gemäß eines vorbestimmten Mengenverhältnisses ergibt.

Zur Überprüfung der korrekten Dosierung kann der Chlorgehalt im Wasser nach der Apparatur, bevorzugt im Ablauf des Chlorkontakt-Beckens, gemessen werden.

Die erforderliche Dosiermenge an Chlorlösung ("Chlordosis") kann nicht nur von der Wassermenge, sondern vielen anderen Einflussfaktoren abhängen, wie Verschmutzungsgrad des Wassers, Reinigungsziel, etc. Erfindungsgemäß bevorzugt kann daher die Fördermenge pro Zeiteinheit der Dosiereinrichtung entsprechend zur korrekten Dosierung angepasst werden.

Das Rohrstück ist erfindungsgemäß bevorzugt gegen die Waagrechte geneigt, bevorzugter um einen Betrag im Bereich von 10 bis 20 Grad, und besonders bevorzugt 15 Grad, wodurch konstruktiv besonders einfach sichergestellt ist, dass im Fall, wenn kein Wasser dort hindurch strömt, sich kein Restwasser dort sammelt und so die Sensorsonde keinen dauernden Kontakt mit Wasser hat und somit kein Signal zur Dosierung sendet. Eine Überdosierung kann somit besonders zuverlässig vermieden werden.

In einer weiteren Ausführungsform der Erfindung ist eine modifizierte Kläranlage vorgesehen, die mindestens eine Dosiervorrichtung gemäß einem der vorhergehenden Ansprüche aufweist, wobei die Dosiervorrichtung stromabwärts einem Klärbereich mit einem Reinigungsbecken nachgeordnet ist.

Weitere Aufgaben, Vorteile, Merkmale und Ausgestaltungen der vorliegenden Erfindung werden ersichtlich aus der folgenden detaillierten Beschreibung bevorzugter Ausführungsformen mit Bezug auf die Zeichnungen.
- Fig. 1: zeigt eine schematische Ansicht einer Dosiervorrichtung gemäß einer Ausführungsform der Erfindung; und
- Fig. 2: zeigt eine schematische Ansicht einer Dosiervorrichtung gemäß einer weiteren Ausführungsform der Erfindung in einer Prinzip Skizze einer biologisch aktiven Kläranlage.

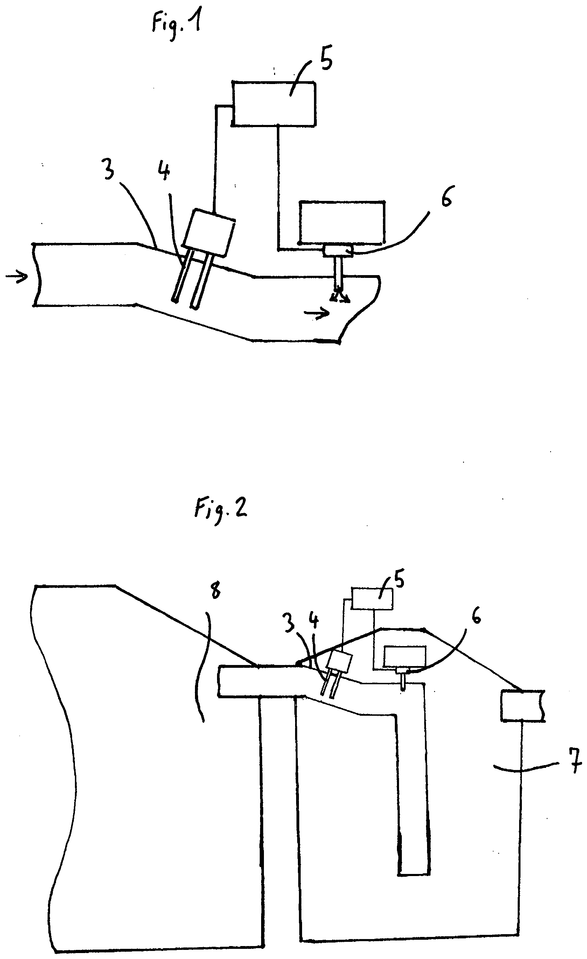

Fig. 1 zeigt eine schematische Ansicht einer Dosiervorrichtung gemäß einer Ausführungsform der Erfindung zur Zugabe von Chlor in Form einer flüssigen Chlorlösung zu Wasser, insbesondere bevorzugt zu gereinigtem Wasser aus einem Reinigungsbecken einer Kläranlage. Ein Rohrstück (3), in welchem Wasser zumindest zeitweise strömt (waagrechte Pfeile in Figur 1), weist im Rohrinneren zumindest eine Sensorsonde (4) auf, welche erfasst, wenn sich dort das Wasser befindet. Das Rohrstück (3) ist bevorzugt um einen Betrag von etwa 15 Grad gegen die Waagrechte geneigt. Die Sensorsonde (4) kann zur Erfassung des Wassers beispielsweise elektrische Widerstandsänderungen bei Eintauchen in Wasser oder frei von Wasser erfassen und dies an eine Steuerungsvorrichtung (5) melden, so dass die Steuerungsvorrichtung (5) ein Signal an eine Dosiereinrichtung (6) für Chlor sendet, so dass die Dosiereinrichtung (6) Chlor in das Wasser abgibt (gebogene Pfeile in Figur 1). Die Dosiereinrichtung (6) weist dazu einen Chlorspeicher (9) mit darin befindlicher flüssiger Chlorlösung auf, der über ein von der Steuerungsvorrichtung (5) gesendetes Signal mittels eines Ventils oder eine Pumpe der Dosiereinrichtung (6) das Chlor aus dem Chlorspeicher (9) an das Wasser abgibt. Die Steuerungsvorrichtung (5) ist dabei bevorzugt so vorgesehen, dass die Menge des abzugebenden Chlors/der Chlorlösung in Abhängigkeit der Menge des strömenden Wassers steuerbar ist, wobei eine größere Menge strömendes Wasser eine größere Menge abzugebenden Chlors/abzugebender Chlorlösung gemäß eines vorbestimmten Mengenverhältnisses ergibt.

Figur 2 zeigt eine schematische Ansicht einer Dosiervorrichtung gemäß einer weiteren Ausführungsform der Erfindung in einer Prinzip Skizze einer biologisch aktiven Kläranlage. Die Kläranlage weist mindestens eine Dosiervorrichtung gemäß der Erfindung auf, wobei die Dosiervorrichtung stromabwärts einem Klärbereich (8) mit einem Reinigungsbecken nachgeordnet ist. Die Dosiereinrichtung (6) ist einem Chlor-Kontaktbecken (7) zugeordnet, in welches das Chlor in das Wasser abgegeben wird.

## Patentansprüche

1. Dosiervorrichtung zur Zugabe von Chlor zu Wasser,
**dadurch gekennzeichnet, dass**
ein Rohrstück (3), in welchem Wasser zumindest zeitweise strömt, zumindest eine Sensorsonde (4) im Rohrinneren aufweist, welche erfasst, wenn sich dort das Wasser befindet und dies an eine Steuerungsvorrichtung (5) meldet, so dass die Steuerungsvorrichtung (5) ein Signal an eine Dosiereinrichtung (6) für Chlor sendet, so dass die Dosiereinrichtung (6) Chlor in das Wasser abgibt.

2. Dosiervorrichtung nach Anspruch 1, **dadurch gekennzeichnet, dass** die Dosiereinrichtung (6) einem Chlor-Kontaktbecken (7) zugeordnet ist, in welches das Chlor in das Wasser abgegeben wird.

3. Dosiervorrichtung nach Anspruch 1 oder Anspruch 2, **dadurch gekennzeichnet, dass** die Steuerungsvorrichtung (5) so vorgesehen ist, dass die Menge des abzugebenden Chlors in Abhängigkeit der Menge des strömenden Wassers steuerbar ist, wobei eine größere Menge strömendes Wasser eine größere Menge abzugebenden Chlors gemäß eines vorbestimmten Mengenverhältnisses ergibt.

4. Dosiervorrichtung nach zumindest einem der Ansprüche 1 bis 3, **dadurch gekennzeichnet, dass** die Dosiereinrichtung (6) eine einstellbare Fördermenge pro Zeiteinheit aufweist.

5. Dosiervorrichtung nach zumindest einem der Ansprüche 1 bis 4, **dadurch gekennzeichnet, dass** das Rohrstück (3) gegen die Waagrechte geneigt ist, bevorzugt um einen Betrag im Bereich von 10 bis 20 Grad, bevorzugter 15 Grad.

6. Kläranlage, die mindestens eine Dosiervorrichtung gemäß einem der vorhergehenden Ansprüche aufweist, wobei die Dosiervorrichtung stromabwärts einem Klärbereich (8) mit einem Reinigungsbecken nachgeordnet ist.
